# EUROPEAN PATENT SPECIFICATION

(11) **EP 2 531 298 B1**
(45) Date of publication and mention of the grant of the patent: **22.08.2018**
(21) Application number: 11740123.2
(22) Date of filing: 28.01.2011
(51) Int. Cl.: B01J 35/00, B01J 37/00

(54) **A BUOYANT MULTIFUNCTIONAL COMPOSITE MATERIAL FOR EFFECTIVE REMOVAL OF ORGANIC COMPOUNDS IN WATER AND WASTEWATER**
MULTIFUNKTIONELLES SCHWIMMENDES VERBUNDMATERIAL ZUR EFFEKTIVEN ENTFERNUNG ORGANISCHER VERBINDUNGEN AUS WASSER UND ABWASSER
MATÉRIAU COMPOSITE MULTIFONCTIONNEL FLOTTANT PERMETTANT D'ÉLIMINER EFFICACEMENT LES COMPOSÉS ORGANIQUES CONTENUS DANS L'EAU ET LES EAUX USÉES

(30) Priority: 02.02.2010 US 300514 P
(43) Date of publication of application: 12.12.2012
(73) Proprietor: National University of Singapore, Singapore 119077 (SG)
(72) Inventor: BAI, Renbi, Singapore 119077 (SG); HAN, Hui, Singapore 119077 (SG)
(74) Representative: Beck Greener
(86) International application number: PCT/SG2011/000044
(87) International publication number: WO 2011/096893

(56) References cited:
- EP-B1- 1 681 370
- US-A- 5 981 426
- US-A1- 2005 011 827
- US-A1- 2005 191 505
- US-A1- 2007 149 397
- US-A1- 2007 149 397
- US-B1- 6 531 100
- HIROSHI TAODA: "DEVELOPMENT AND APPLICATION OF PHOTOCATALYTIC TECHNOLOGY", SYNTHESIOLOGY-ENGLISH EDITION, vol. 1, no. 4, 31 December 2009 (2009-12-31), pages 263-272, XP002708432,
- Azzaryiatul Hafizah Amar: "Development of a simple dip coating method for immobilization of TiO2 onto solid supports using direct TiO2 powder (Thesis)", , 21 January 2009 (2009-01-21), pages i-24, XP002708433, Retrieved from the Internet: URL:http://eprints.usm.my/7847/1/DEVELOPME NT_OF_A_SIMPLE_DIP_COATING_METHOD_FOR_IMMO BILIZATION_OF_TiO2_ONTO_SOLID_SUPPORTS_USI NG_DIRECT_TiO2_POWDER.pdf [retrieved on 2013-08-01]
- EVA S. LONCAR ET AL.: "DETERMINATION OF THE PHOTOCATALYTIC ACTIVITY OF TiO2 COATINGS ON CLAY ROOFING TILE SUBSTRATES-METHYLENE BLUE AS MODEL POLLUTANT", Academic Journals database, 31 December 2009 (2009-12-31), pages 125-133, XP002708456, Retrieved from the Internet: URL:http://www.journaldatabase.org/article s/determination_photocatalytic_activity.ht ml [retrieved on 2013-08-01]
- SZE M. LAM ET AL.: "RECENT PATENTS ON PHOTOCATALYSIS OVER NANOSIZED TITANIUM DIOXIDE", Recent Patents on Chemical Engineering , 31 December 2008 (2008-12-31), pages 209-219, XP002708457, Retrieved from the Internet: URL:http://www.benthamscience.com/cheng/sa mples/cheng1-3.tar/0004CHENG.pdf [retrieved on 2013-08-01]
- GUAN-TING PAN ET AL.: "Immobilization of TiO2 onto nonwoven fiber textile by silica sol: photocatalytic activity and duradibility studies", JOURNAL OF ENVIRONMENTAL ENGINEERING AND MANAGEMENT , vol. 16, no. 6 31 December 2006 (2006-12-31), pages 413-420, XP002708458, Retrieved from the Internet: URL:http://ser.cienve.org.tw/download/16-6 /jeeam16-6_413-420.pdf [retrieved on 2013-08-01]
- FABIYI M E ET AL: "PHOTOCATALYTIC MINERALISATION OF METHYLENE BLUE USING BUOYANT TIO2-COATED POLYSTYRENE BEADS", JOURNAL OF PHOTOCHEMISTRY AND PHOTOBIOLOGY, A: CHEMIS, ELSEVIER SEQUOIA, LAUSANNE, CH, vol. 132, no. 1/02, 1 January 2000 (2000-01-01), pages 121-128, XP009058941, ISSN: 1010-6030, DOI: 10.1016/S1010-6030(99)00250-6
- SHIFU C ET AL: "Photocatalytic degradation of organophosphorus pesticides using floating photocatalyst TiO"2.SiO"2/beads by sunlight", SOLAR ENE, PERGAMON PRESS. OXFORD, GB, vol. 79, no. 1, 1 July 2005 (2005-07-01), pages 1-9, XP004942366, ISSN: 0038-092X, DOI: 10.1016/J.SOLENER.2004.10.006
- F. Magalhães ET AL: "Floating photocatalysts based on TiO2 grafted on expanded polystyrene beads for the solar degradation of dyes", SOLAR ENERGY., vol. 83, no. 9, 1 September 2009 (2009-09-01), pages 1521-1526, XP55418274, GB ISSN: 0038-092X, DOI: 10.1016/j.solener.2009.04.005

## Description

### BACKGROUND OF THE INVENTION

Conventionally, the bulk amount of organic compounds in wastewater is usually removed through various biological processes. For relatively low levels of organic compounds in effluents from wastewater treatment plants for reclamation or in raw water for a water supply, adsorption has usually been used as the removal method in common industrial practices. However, many organic compounds in industrial effluents, such as dyes, phenolic and synthetic matters, or in natural water, such as humic matters, are not practically biodegradable. Thus, conventional biological processes have often failed to achieve the desired treatment goals. On the other hand, the removal of organic compounds by adsorption is largely dependent upon the capacity and property of the adsorbents used. The adsorbents usually require frequent regeneration to restore their function, which in many cases has proven difficult, if not impossible, to achieve. Furthermore, frequent regeneration incurs high capital and operational costs.

Advanced oxidation processes (AOPs), such as ozone oxidation, Fenton reaction or photocatalysis, that can degrade organic compounds, including toxic ones, ultimately into minerals (e.g., carbon dioxide and water) have attracted increasingly greater interest in recent years for the decontamination of water and wastewater. Among these processes, photocatalysis has been an area of focus because it does not require additional chemicals in the treatment reaction. In a photocatalytic process, photocatalysts under light irradiation produce active radicals that can attack the organic compounds in water or wastewater and degrade them into simpler or nontoxic ones. However, these radicals can easily lose their activity within the time scale of less than 10⁻⁵ of a second through either a reaction with the organic pollutants or by recombining with other radicals or carriers. When the targeted organic pollutants are present at low concentrations or when the mass transfer of the organic pollutants from water to the photocatalysts is a limiting factor, most radicals can quickly lose their activity before they have a chance to encounter a pollutant compound and participate in the degradation reaction. In order to overcome this problem, some studies have combined an adsorbent with a photocatalyst, either through immobilizing photocatalyst particles onto an adsorbent powder or mixing an adsorbent powder with the photocatalyst particles. Y. Li et al., Water Res. 40 (2006) 1119-1125; X. Wang et al., J. Hazard. Mater. 169 (2009) 1061-1067. Prior studies have found that these approaches improved the kinetics of pollutant removal, i.e., pollutants more rapidly photo-decomposed in a combined adsorbent and photocatalyst system as compared to a single photocatalyst system.

The document "PHOTOCATALYTIC MINERALISATION OF METHYLENE BLUE SING BUOYANT TiO2-COATED POLYSTYRENE BEAD"; M.E. BABYYI ET AL; JOURNAL OF PHOTOCHEMISTRY AND PHOTOBIOLOGY; A. CHEMISTRY VOL. 132 (2000) PAGES 121-128 discloses buoyant substrates containing TiO₂ thereon.

The accelerated reaction rate was explained as resulting from the adsorption of the pollutants onto the adsorbent followed by rapid migration of the pollutants to the surface of the photocatalyst. However, there have been various issues that need to be resolved. First, both photocatalysts and adsorbents were in very small sized powders (often in the nanometer or micrometer range) and hence were very difficult and costly to separate from the treated water. Second, the photocatalysts in powder or small particle forms were usually applied in the water to be treated in a slurry manner. Light provided either from UV lamps installed in the water or above the water surface or from natural sunlight must travel through the water to reach the surface of the photocatalyst particles. Unfortunately, light attenuates more significantly with distance in water, as compared to attenuation with distance through air. As a result, the provided light often has a very low utilization efficiency in these conventional photocatalytic processes. Third, the porous adsorbent used in the combined adsorption/photocatalysis system was fouled by the photocatalyst particles in the pores, and the performance of both the adsorbent and photocatalyst was greatly reduced. Therefore, there is a need for materials and methods that achieve the synergetic effect of adsorption, photocatalysis and light utilization efficiency for the effective and low cost removal and mineralization of organic compounds in water and wastewater. Also, there is a need for developments that address the selectivity of such treatment systems for specific organic contaminants.

### SUMMARY OF THE INVENTION

The subject-matter of the present invention is defined in the wordings of independent claims 1 and 11. Further embodiments are defined in the wordings of dependent claims 2-10 and 12-13. In this invention, there is provided a buoyant composite material comprising:
a substrate having a buoyancy, wherein the substrate is a thermoplastic selected from polypropylene, polyethylene, polystyrene and nylon and blends thereof, the thermoplastic having a specific gravity less than 1;
an adsorbent selected from activated carbon and zeolite for adsorbing organic compounds;
a photocatalyst for degradation of organic compounds, wherein the photocatalyst is selected from titanium dioxide (TiO₂), zinc oxide (ZnO), cadmium sulfide (CdS), tungsten (VI) trioxide (WO₃), silicon carbide (SiC), or any combination thereof; and one or more enhancers for facilitating mass transfer between the adsorbent and the photocatalyst, increasing the selectivity of the composite material, increasing the chemical stability of the composite material, and/or improving the photocatalytic efficiency, wherein the one or more enhancers are selected from carbon nanotubes, a precious metal salt, and SiO₂,,
wherein the adsorbent, photocatalyst and enhancer are immobilized on the substrate through a melting-binding method under controlled temperatures. The three types of component materials with different functions are immobilized on a thermoplastic substrate through a melting-binding method under controlled temperatures to obtain a buoyant multifunctional composite material. The component materials include a photocatalyst, an adsorbent and a synergetic enhancer. The substrate is selected so that it not only serves as the carrier for the component materials, but it also provides the bulk density for buoyancy of the final product.

In this invention, there is additionally provided a method of preparing the buoyant composite material, the method comprising:
mixing the adsorbent, the photocatalyst and the enhancer to form a mixture;
reacting, with stirring, the mixture at a temperature 10°C below to 30°C above the melting point of a substrate;
adding the substrate to the mixture;
allowing the mixture to immobilize by melting-binding onto the substrate to form the composite material; and
separating the composite material from remaining mixture. The method preferably further comprises:
   a) cooling the composite material;
   b) washing the composite material; or
   c) drying the composite material.

The final buoyant multifunctional composite material can easily be suspended in water, but it will naturally float to the water surface. Therefore, the body of water in the treatment process can be separated into a top layer with the composite material and a bottom zone of water only. Thus, it is easier to separate the composite material from the treated water. Since the composite material floats at the water surface, the photocatalyst on the substrate can use light, either from UV lamps or natural sunlight, at a higher efficiency because light does not attenuate as significantly when it travels through the air as compared to when it travels through water.

The adsorbent on the substrate can quickly concentrate organic compounds from the bulk water when they are suspended in water and provide the photocatalyst with organic compounds for degradation at an enhanced mass transfer rate. This overcomes the problem in conventional photocatalytic degradation technology where the supply of organic compounds from water to photocatalyst is often limited by slow mass transfer. The photocatalyst on the substrate can degrade organic compounds into simple ones (ultimately into minerals) from the adsorbent and continuously regenerate the adsorbent. This eliminates the additional regeneration process, which is necessary in conventional adsorption technology.

An enhancer can be added in the components and immobilized on the substrate to provide a synergetic effect to the combination of adsorption and photocatalysis and can add selectivity to the composite material. For example, the enhancer may function as a bridge or passage for mass transfer of organic compounds between the adsorbent and the photocatalyst. As another example, the enhancer can prevent the recombination of electrons and holes generated on the photocatalyst during light irradiation, thereby improving the activity of photocatalyst by increasing photocatalytic degradation efficiency for organic compounds.

The buoyant composite material is prepared from a thermoplastic with a specific gravity of less than 1. The thermoplastic functions as a substrate on which the adsorbent, enhancer and photocatalyst components are disposed. The thermoplastic is selected from polypropylene, polyethylene, polystyrene and nylon and their blends.

The composite material includes adsorbents and photocatalysts and thus combines adsorption and photocatalysis functions together. The adsorbent concentrates organic compounds in water and provides faster mass transfer of organic compounds to the photocatalyst. The adsorbent is selected from activated carbon and zeolite. The photocatalyst degrades organic compounds from the adsorbent and regenerates/recovers the adsorbent continuously. The photocatalyst is selected from titanium dioxide (TiO₂), zinc oxide (ZnO), cadmium sulfide (CdS), tungsten (VI) trioxide (WO₃), silicon carbide (SiC), or any combination thereof.

Compared to conventional adsorption technologies, which require an additional process to frequently regenerate the adsorbent to recover its capacity, and thus are very costly, the present invention does not require an additional process to regenerate the adsorbent. Compared to conventional photocatalytic technologies that often suffer from the problem of slow mass transfer of organic compounds from bulk water to the photocatalyst, the present invention provides higher mass transfer rates to the photocatalyst because the adsorbent can quickly concentrate organic compounds from the bulk water.

The composite material can contain an enhancer that provides a synergetic effect between the adsorbent and photocatalyst, such as facilitating mass transfer from the adsorbent to the photocatalyst, increasing the selectivity for organic compounds to be separated and degraded, or entrapping electrons to prevent electron-hole recombination, which can improve photocatalytic reaction efficiency. There have so far not been any such developments in preparing the composite material.

The photocatalytic reaction of the composite material can take place at the water surface and can fully utilize the light provided in the air medium. This solves the problem of low light utilization efficiency encountered in conventional photocatalytic technologies that often use light in water, which results in high installation cost as well as significant attenuation of the light provided.

The buoyant multifunctional composite material can be used in any water and wastewater treatment where removal of organic compounds is needed. The material provides competitive solutions especially where toxic and non-biodegradable organic compounds are involved, including most industrial effluents. It also has the advantage of providing a simple treatment system that potentially requires lower capital and operational costs.

In accordance with the present invention, the buoyant multifunctional composite material can be prepared from the following processes:
(a) The selected adsorbents, photocatalysts and enhancers in proper particle or molecular sizes and weight or volume ratios are mixed together. These components can be in the form of particles, small tubes, fibers, powders, etc. and should be chemically stable at temperatures up to 30°C above the melting point of the substrate.
(b) The selected thermoplastic substrate in the form of granules, fibers, sheets or other shapes with a much larger size than the component materials in (a) is cleaned with water, alcohol or other solvent as needed and then dried.
(c) In a reactor, the mixture of the adsorbent, photocatalyst and enhancer is heated, under stirring, to and then maintained at a specific temperature in the range of 10°C below to 30°C above the melting point of the substrate, depending on the final shape of the composite material to be prepared. The substrate is then added into the mixture and the mixing continues for a time in the range of 1min to 15min until the surface of the substrate is fully covered with the component mixture.
(d) The composite material is separated from the remaining component mixture through a sieve and is cooled down to room temperature.
(e) The prepared material is washed with water or a water/alcohol mixture and dried to obtain the final product.

The present invention provides several advantages. The composite material is buoyant and thus can be used at the water surface. Since light does not attenuate as significantly while traveling through air as compared to water, the light provided to the photocatalyst can be more fully utilized. In addition, natural sunlight can be used as the light source for the photocatalytic processes.

The composite material also has good adsorption performance to quickly concentrate organic compounds in water or wastewater, and thus improves or enhances the mass transfer rate of organic compounds in water to the photocatalytic reaction site on the surface of the material.

The composite material has good photocatalytic degradation performance for organic compounds under the irradiation of UV light, visible light or both, which will not only degrade the organic compounds on the material into harmless simpler ones, but will also simultaneously regenerate the material and recover its adsorptive performance to organic compounds in water.

The material can contain one or more enhancers that enhance the synergetic effects between adsorption and photocatalysis and increase or improve the selectivity of the material to specific organic compounds or the chemical stability of the prepared composite material.

Thus, the current invention provides a simple solution that is cost-effective and can achieve multiple functions in one process, which conventional technologies may not be able to achieve or may need multiple stages to achieve. The buoyant feature of the material solves the separation problem that has been encountered for the commonly used slurry systems of photocatalysts or adsorbents. In conventional technologies, photocatalysts and adsorbents are often used in the form of nano or micro particles. The conventional technologies have presented a significant problem in separation after water is treated, and separation usually incurs very high operational costs. The buoyant material can float to the surface and hence can be easily handled and separated when needed.

### BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.

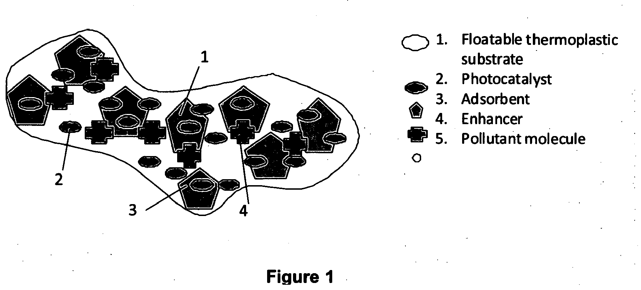

Figure 1 is a schematic illustration of a configuration of the multifunctional composite material described in this invention. The small-sized components immobilized on the granular substrate include the adsorbent, photocatalyst and enhancer.

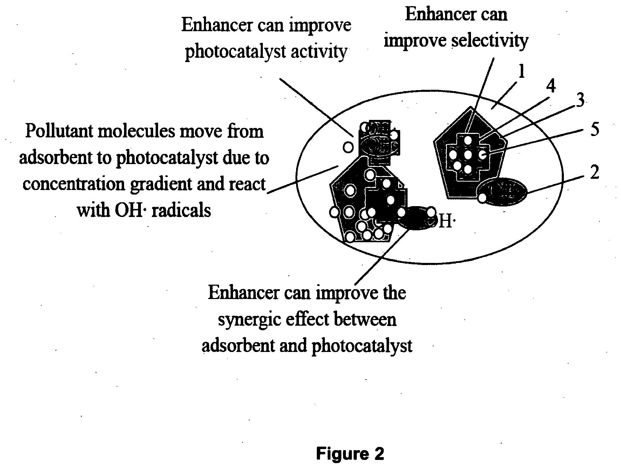

Figure 2 is a schematic illustration of the mechanisms by which enhancers can improve the synergetic effect between the adsorbent and the photocatalyst. Organic compounds are adsorbed by the adsorbent and transferred to the photocatalyst where active groups such as hydroxyl radicals (OH·) are produced. The enhancer can improve the selectivity of the composite material, the activity of the photocatalyst, or the mass transfer between adsorbent and photocatalyst.

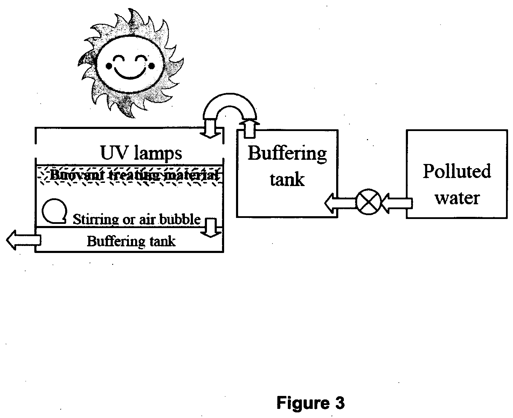

Figure 3 is a schematic illustration of a water treatment system that uses the composite material in a simple and cost-effective manner. The light source can be either natural sunlight or UV lamps installed above the water surface. The composite material is mixed with the water to be treated and it floats to the surface of the water. The treated water can be collected from the bottom of the reactor without any practical difficulties.

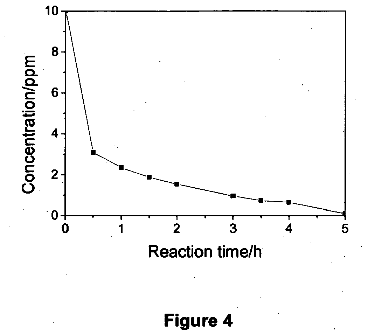

Figure 4 is a graph of phenol concentration (ppm) versus time (hours) for a photocatalytic reaction under a xenon lamp in a beaker with water, phenol, and a buoyant multifunctional composite.

### DETAILED DESCRIPTION OF THE INVENTION

A description of example embodiments of the invention follows.

The present invention is concerned with a buoyant multifunctional composite material, its preparation method and its application process.
a) The photocatalyst component can be any active photocatalysts, typically TiO₂, in powder, tube or fiber form with an effective size of approximately 1nm to approximately 50,000nm, typically approximately 10nm to approximately 100nm. The adsorbent component can be any adsorbent, such as inorganic or organic, and can be a single type of adsorbent or a mixture of adsorbents. Typically, the adsorbent can be activated carbon or zeolite or both, in powder or tube form, with effective sizes in the range of approximately 1nm to approximately 100,000nm. Both the adsorbent and photocatalyst components are stable at temperatures ranging from below the melting point of the substrate to 30°C above the melting point of the substrate. For example, the lower limit of the range of temperatures below the melting point may include, but is not limited to, 0°C. The enhancers can be any compounds that improve the selectivity and activity of the prepared composite material. Typically, the enhancers can be a carbon nanotube, a precious metal salt, or SiO₂. The adsorbent, photocatalyst or both may be pretreated with the selected enhancer or enhancers. The enhancer or enhancers may also be directly mixed with the adsorbent and the photocatalyst components. The mass ratio of the adsorbent to the photocatalyst in the mixture can vary from approximately 0.1 to approximately 10, typically approximately 0.2 to approximately 6. The mass of the enhancer can be approximately 0.001 % to approximately 5% of the mass of the adsorbent, the mass of the photocatalyst or the combined mass of the adsorbent and the photocatalyst, typically approximately 0.01% to approximately 0.2% of the mass of the adsorbent, the mass of the photocatalyst, or the combined mass of the adsorbent and the photocatalyst. The substrate can be any thermoplastics or their blends or alloys with a specific gravity of approximately 0.8 to approximately 1, typically approximately 0.9 to approximately 0.95.
b) The mixture of adsorbent, photocatalyst and enhancer is well mixed and then pre-heated to and maintained at a temperature in the range of approximately 10°C below to approximately 30°C above the melting point of the substrate. Then, the substrate having a volume of approximately 10% to approximately 60% of the mixture, typically approximately 30% to approximately 50%, is added into the pre-heated mixture with stirring for approximately 0.5min to approximately 30min, typically approximately 2min to approximately 10min, until all the substrate surfaces are fusion-bonded and fully covered with the photocatalyst/adsorbent/enhancer mixture. The prepared composite material is then separated from the mixture by a sieve. The thermoplastic substrate may have a melting point in the range of approximately 80°C to approximately 300°C, typically approximately 100°C to approximately 180°C. The prepared composite material can be in, but is not limited to, the shape of a fiber, a fabric, a sheet or granules.
   In an alternative route, the substrate is heated to approximately 10°C to approximately 25°C above its melting point. Then, the liquid substrate can be extruded through a mould and cut into granules, tubes, fibers etc. and mixed with the adsorbent, photocatalyst and enhancer mixture. After cooling, the prepared composite material is separated from the mixture by a sieve.
c) The prepared multifunctional composite material can be used in a water or wastewater treatment reactor with UV lamps or sunlight as the light source. The multifunctional composite material can be put into a reactor with a minimum quantity that just covers the water surface, or with a maximum quantity filled up to 70% of the reactor volume. The light source is designed to be provided to the reactor from the top of the reactor at a wavelength determined by the photo sensitivity of the photocatalyst and with a light intensity of at least 30W/m². The mass transfer of organic compounds in water may be enhanced by stirring, such as, but not limited to, stirring by air bubbling or mechanical mixing.

### Example 1.

A 5 gram amount of TiO₂ particles with a size of 25 nm is treated in a 2g/L salicylic acid solution for 30 min, and dried in an oven at 100°C for 2h. Then, the treated TiO₂ particles are mixed with 0.05 grams of multiwall carbon nanotubes (110∼170nm diameter at 5∼9µm length), and heated at 200°C for 2h in an oven. Then, a 10 gram amount of 100 mesh activated carbon particles is mixed with the TiO₂ and carbon nanotube mixture, and all of the components are then placed into a 250mL reactor. The mixture in the reactor is preheated to and maintained at 200°C with a hot-plate heater and stirred with a mechanical mixer. Then, a 30 gram amount of polypropylene (PP) granules with a diameter of approximately 4mm is added into the reactor. The mixture in the reactor is further heated with stirring for the temperature to increase to and be maintained at 160°C. The process continues for another 3min. Then, the PP granules are fully immobilized with small-sized powder mixture and are separated from the remaining powder through a sieve and cooled down to room temperature to obtain the composite material to be prepared. For the demonstration of an application, a 3 gram amount of the buoyant multifunctional composite material is added into a 100mL beaker filled with 50mL of a 50 ppm phenol solution with air bubbling. The content in the beaker is put under a xenon lamp with a UV light of 48W/m² power (Newport). The phenol in the solution was found to be completely removed within 4h.

### Comparative Example 2.

A multifunctional buoyant photocatalyst was prepared from 50 grams P25 TiO₂ (AEROXIDE, Degussa) mixed with 50 grams of 100 mesh activated carbon particles in an 800 mL reactor. The mixture was preheated to and maintained at 185°C with a hot-plate heater and stirred with a mechanical mixer. Next, 50 polypropylene (PP) granules having a diameter of about 4 mm were added into the reactor. The mixture was further heated with stirring for 10min. The PP granules were coated with TiO₂ and activated carbon particles. The treated PP granules were then collected and washed with ethanol and water. The washed granules were added to a 300 mL glass beaker along with 300 mL of a 10 ppm phenol solution. The glass beaker was irradiated by a 150 W xenon lamp having a 3" diameter light beam. One and a half liters per minute of air was introduced to the phenol solution with an air diffuser. The phenol concentration was analyzed by HPLC equipped with a C18 column. As shown in Figure 4, the concentration of phenol approached 0 ppm after five hours.

While this invention has been particularly shown and described with references to example embodiments thereof, it will be understood by those skilled in the art that various changes in form and details may be made therein without departing from the scope of the invention encompassed by the appended claims.

## Claims

1. A buoyant composite material comprising:
a substrate having a buoyancy, wherein the substrate is a thermoplastic selected from polypropylene, polyethylene, polystyrene and nylon and blends thereof, the thermoplastic having a specific gravity less than 1;
an adsorbent selected from activated carbon and zeolite for adsorbing organic compounds;
a photocatalyst for degradation of organic compounds, wherein the photocatalyst is selected from titanium dioxide (TiO₂), zinc oxide (ZnO), cadmium sulfide (CdS), tungsten (VI) trioxide (WO₃), silicon carbide (SiC), or any combination thereof; and
one or more enhancers for facilitating mass transfer between the adsorbent and the photocatalyst, increasing the selectivity of the composite material, increasing the chemical stability of the composite material, and/or improving the photocatalytic efficiency, wherein the one or more enhancers are selected from carbon nanotubes, a precious metal salt, and SiO₂,,
wherein the adsorbent, photocatalyst and enhancer are immobilized on the substrate through a melting-binding method under controlled temperatures.

2. The composite material of Claim 1, wherein the substrate is in the form of granules, fibers, sheets and other shapes of a size greater than the component materials.

3. The composite material of Claim 1, wherein the adsorbent concentrates organic compounds and facilitates the adsorbed organic compounds for mass transfer to the photocatalyst.

4. The composite material of Claim 3, wherein the adsorbent is chemically stable at temperatures ranging from below the melting point of the substrate to 30°C above the melting point of the substrate.

5. The composite material of Claim 1, wherein the photocatalyst has a diameter ranging from 1nm to 50,000nm.

6. The composite material of Claim 5, wherein the photocatalyst has a diameter ranging from 10nm to 100nm.

7. The composite material of Claim 1, wherein the enhancer provides selectivity for removal and degradation of organic compounds, increases photocatalytic activity of the composite material, or increases the chemical stability of the composite material.

8. The composite material of Claim 1, wherein the ratio of the adsorbent to the photocatalyst is 0.1 to 10.

9. The composite material of Claim 1, wherein the amount of the enhancer is
(a) 0.001% to 5% of the amount of adsorbent in grams, or
(b) 0.001% to 5% of the amount of photocatalyst in grams.

10. The composite material of Claim 9, wherein the substrate has a specific gravity of from 0.8 to less than 1.

11. A method of preparing the buoyant composite material of any one of claims 1 to 10, the method comprising:
mixing the adsorbent, the photocatalyst and the enhancer to form a mixture;
reacting, with stirring, the mixture at a temperature 10°C below to 30°C above the melting point of a substrate;
adding the substrate to the mixture;
allowing the mixture to immobilize by melting-binding onto the substrate to form the composite material; and
separating the composite material from remaining mixture.

12. The method according to claim 11, further comprising:
a) cooling the composite material;
b) washing the composite material; or
c) drying the composite material.

13. The method according to claim 12, wherein the mixture immobilized on the substrate covers the substrate surface completely.

## Patentansprüche

1. Schwimmendes Verbundmaterial, umfassend:
ein Substrat mit Auftrieb, wobei es sich bei dem Substrat um einen Thermoplast handelt, der ausgewählt ist aus Polypropylen, Polyethylen, Polystyrol und Nylon und Mischungen davon, wobei der Thermoplast eine relative Dichte von weniger als 1 aufweist;
ein Adsorptionsmittel, das ausgewählt ist aus Aktivkohle und Zeolith, zum Adsorbieren organischer Verbindungen;
einen Photokatalysator zum Abbau organischer Verbindungen, wobei der Photokatalysator ausgewählt ist aus Titandioxid (TiO₂), Zinkoxid (ZnO), Cadmiumsulfid (CdS), Wolfram(VI)-oxid (WO₃), Siliciumcarbid (SiC) oder einer Kombination davon; und
einen oder mehrere Verstärker zum Erleichtern eines Stoffaustauschs zwischen dem Adsorptionsmittel und dem Photokatalysator, Erhöhen der Selektivität des Verbundmaterials, Erhöhen der chemischen Stabilität des Verbundmaterials und/oder Verbessern der photokatalytischen Wirksamkeit, wobei der eine oder die mehreren Verstärker ausgewählt sind aus Kohlenstoffhanoröhren, einem Edelmetallsalz und SiO₂,
wobei das Adsorptionsmittel, der Photokatalysator und der Verstärker auf dem Substrat durch ein Schmelzbindungsverfahren bei kontrollierten Temperaturen immobilisiert werden.

2. Verbundmaterial nach Anspruch 1, wobei das Substrat in der Form von Granulat, Fasern, Folien und anderen Formen in einer Größe vorliegt, die größer als die Verbundmaterialien ist.

3. Verbundmaterial nach Anspruch 1, wobei das Adsorptionsmittel organische Verbindungen konzentriert und den Stoffaustausch der adsorbierten organischen Verbindungen mit dem Photokatalysator erleichtert.

4. Verbundmaterial nach Anspruch 3, wobei das Adsorptionsmittel bei Temperaturen chemisch stabil ist, die im Bereich von unterhalb des Schmelzpunkts des Substrats bis 30 °C über dem Schmelzpunkt des Substrats liegen.

5. Verbundmaterial nach Anspruch 1, wobei der Photokatalysator einen Durchmesser im Bereich von 1 nm bis 50.000 nm aufweist.

6. Verbundmaterial nach Anspruch 5, wobei der Photokatalysator einen Durchmesser im Bereich von 10 nm bis 100 nm aufweist.

7. Verbundmaterial nach Anspruch 1, wobei der Verstärker Selektivität zur Entfernung und zum Abbau organischer Verbindungen bereitstellt, die photokatalytische Aktivität des Verbundmaterials erhöht oder die chemische Stabilität des Verbundmaterials erhöht.

8. Verbundmaterial nach Anspruch 1, wobei das Verhältnis des Adsorptionsmittels zu dem Photokatalysator 0,1 bis 10 beträgt.

9. Verbundmaterial nach Anspruch 1, wobei die Menge des Verstärkers
(a) 0,001 % bis 5 % der Menge an Adsorptionsmittel in Gramm beträgt oder
(b) 0,001 % bis 5 % der Menge an Photokatalysator in Gramm beträgt.

10. Verbundmaterial nach Anspruch 9, wobei das Substrat eine relative Dichte von 0,8 bis weniger als 1 aufweist.

11. Verfahren zum Herstellen des schwimmenden Verbundmaterials nach einem der Ansprüche 1 bis 10, wobei das Verfahren Folgendes umfasst:
Mischen des Adsorptionsmittels, des Photokatalysators und des Verstärkers unter Bildung eines Gemischs;
Umsetzen des Gemischs unter Rühren bei einer Temperatur von 10 °C unter bis 30 °C über dem Schmelzpunkt eines Substrats;
Zugeben des Substrats zu dem Gemisch;
Immobilisieren-Lassen des Gemischs auf dem Substrat durch Schmelzbindung unter Bildung des Verbundmaterials; und
Trennen des Verbundmaterials vom verbleibenden Gemisch.

12. Verfahren nach Anspruch 11, ferner umfassend:
a) Abkühlen des Verbundmaterials;
b) Waschen des Verbundmaterials; oder
c) Trocknen des Verbundmaterials.

13. Verfahren nach Anspruch 12, wobei das auf dem Substrat immobilisierte Gemisch die Substratoberfläche vollständig abdeckt.

## Revendications

1. Matériau composite flottant comprenant :
un substrat présentant flottabilité, ledit substrat étant un thermoplastique choisi parmi le polypropylène, le polyéthylène, le polystyrène et le nylon et des mélanges de ceux-ci, le thermoplastique présentant une densité inférieure à 1 ; un adsorbant choisi parmi le charbon actif et la zéolite pour adsorber des composés organiques ;
un photocatalyseur pour la dégradation de composés organiques, ledit photocatalyseur étant choisi parmi le dioxyde de titane (TiO₂), l'oxyde de zinc (ZnO), le sulfure de cadmium (CdS), le trioxyde de tungstène (VI) (WO₃), le carbure de silicium (SiC), ou toute combinaison de ceux-ci ; et
un ou plusieurs activateurs pour faciliter le transfert de masse entre l'adsorbant et le photocatalyseur, augmenter la sélectivité du matériau composite, augmenter la stabilité chimique du matériau composite, et/ou améliorer l'efficacité photocatalytique, lesdits un ou plusieurs activateurs étant choisis parmi les nanotubes de carbone, un sel de métal précieux, et SiO₂,
ledit adsorbant, ledit photocatalyseur et ledit activateur étant immobilisés sur le substrat par l'intermédiaire d'un procédé de fusion-liaison à des températures contrôlées.

2. Matériau composite selon la revendication 1, ledit substrat étant sous la forme de granulés, de fibres, de feuilles et d'autres formes d'une taille supérieure aux matériaux composants.

3. Matériau composite selon la revendication 1, ledit adsorbant concentrant des composés organiques et facilitant le transfert de masse des composés organiques adsorbés vers le photocatalyseur.

4. Matériau composite selon la revendication 3, ledit adsorbant étant chimiquement stable à des températures allant d'une température inférieure au point de fusion du substrat à une température 30°C supérieure au point de fusion du substrat.

5. Matériau composite selon la revendication 1, ledit photocatalyseur ayant un diamètre allant de 1 nm à 50000 nm.

6. Matériau composite selon la revendication 5, ledit photocatalyseur ayant un diamètre allant de 10 nm à 100 nm.

7. Matériau composite selon la revendication 1, ledit activateur assurant une sélectivité pour la suppression et la dégradation de composés organiques, augmentant l'activité photocatalytique du matériau composite, ou augmentant la stabilité chimique du matériau composite.

8. Matériau composite selon la revendication 1, le rapport de l'adsorbant sur le photocatalyseur valant 0,1 à 10.

9. Matériau composite selon la revendication 1, la quantité de l'activateur représentant
(a) 0,001 % à 5 % de la quantité d'adsorbant en grammes, ou
(b) 0,001 % à 5 % de la quantité de photocatalyseur en grammes.

10. Matériau composite selon la revendication 9, ledit substrat ayant une densité allant de 0,8 à moins de 1.

11. Procédé de préparation du matériau composite flottant selon l'une quelconque des revendications 1 à 10, le procédé comprenant :
le mélange de l'adsorbant, du photocatalyseur et de l'activateur pour former un mélange ;
la réaction, sous agitation, du mélange à une température 10°C inférieure jusqu'à 30°C supérieure au point de fusion d'un substrat ;
l'ajout du substrat au mélange ;
le fait de laisser le mélange s'immobiliser par fusion-liaison sur le substrat pour former le matériau composite ; et
la séparation du matériau composite du mélange restant.

12. Procédé selon la revendication 11, comprenant en outre :
a) le refroidissement du matériau composite ;
b) le lavage du matériau composite ; ou
c) le séchage du matériau composite.

13. Procédé selon la revendication 12, ledit mélange immobilisé sur le substrat recouvrant complètement la surface du substrat.
